# EUROPEAN PATENT SPECIFICATION

(11) **EP 1 801 533 B1**
(45) Date of publication and mention of the grant of the patent: **10.01.2018**
(21) Application number: 06123626.1
(22) Date of filing: 07.11.2006
(51) Int. Cl.: F28F 5/02

(54) **Heating fluid medium passing roller device**
Mit einer Flüssigkeit geheizte Walze
Rouleau chauffé par un fluide

(30) Priority: 21.12.2005 JP 2005367864
(43) Date of publication of application: 27.06.2007
(73) Proprietor: Tokuden Co., Ltd., Kyoto-shi, Kyoto (JP)
(72) Inventor: TONOMURA, Toru, TOKUDEN CO., LTD., Kyoto-shi Kyoto (JP); OKAMOTO, Kozo, TOKUDEN CO., LTD., Kyoto-shi Kyoto (JP); FUJIMOTO, Yasuhiro, TOKUDEN CO., LTD., Kyoto-shi Kyoto (JP); HIRAO, Motomasa, TOKUDEN CO., LTD., Kyoto-shi Kyoto (JP)
(74) Representative: TBK

(56) References cited:
- EP-A1- 0 844 084
- JP-A- 2004 195 888
- US-A- 3 838 734
- US-A- 4 282 638
- US-A- 4 875 297
- US-A- 5 111 564
- US-B1- 6 209 451
- US-B1- 6 220 161

## Description

### BACKGROUND OF THE INVENTION

This invention relates to a heating fluid medium passing roller device.

It is prevalent that a sheet-like object to be treated hung on a roller is heated or heat-deprived to a predetermined temperature while it moves in contact with the roller. As such a roller device, proposed is a heating fluid medium passing roller device in which a heated heating fluid medium of fluid such as oil is caused to circulate/flow into the roller by a pump through a heat exchanger device, and by this flowing, the temperature of the roller is kept at a predetermined temperature.

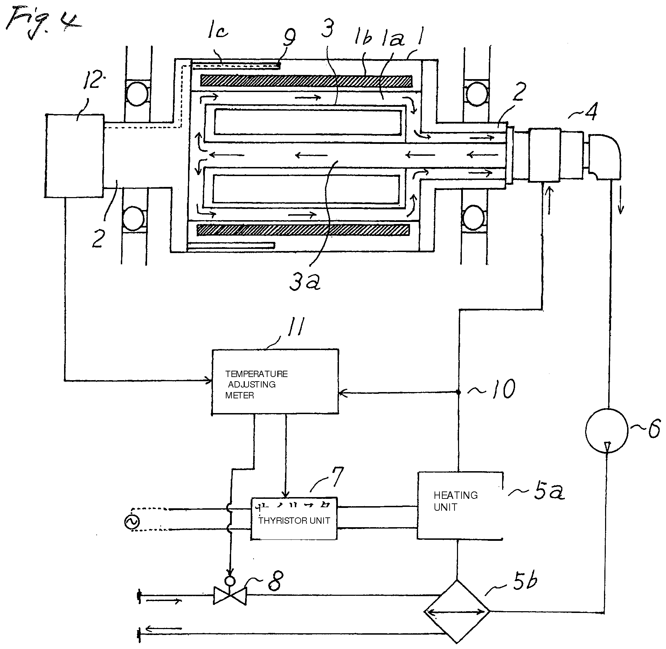

Fig. 4 shows a configuration of such a generic heating fluid medium passing roller device according to the preambles of claims 1 to 3, which is disclosed in JP 2004 195 888 A. In Fig. 4, reference numeral 1 denotes a roll shell constituting a roller body; 2 a rotary driving shaft rotated by a motor (not shown) to rotate the roll shell; 3 a core; 4 a rotary joint; 5a a heating unit of a heat exchanger device; 5b a cooling unit of the heat exchanger; 6 a heating fluid medium circulating pump; 7 an electric power control circuit such as a thyristor; 8 a cooling water adjusting electromagnetic valve; 9 a temperature sensor for detecting the temperature of the roll shell 1; 10 a temperature sensor for detecting the temperature of the heating fluid medium to be supplied into the roll shell 1; 11 a heating fluid medium temperature adjusting circuit; and 12 a rotary transformer.

The roll shell 1 is formed in a cylindrical shape. In this example, within the wall of the roller, a jacket chamber 1b and a temperature sensor inserting hole 1c are formed to extend in the longitudinal direction of the roll shell. Within the temperature sensor inserting hole 1c, a temperature sensor 9 is arranged for detecting the surface temperature of the roll shell 1. The jacket chamber 1b is sealed with a gas-liquid two-phase heating medium such as water which serves to make the surface temperature of the roll shell 1 uniform by movement of latent heat. Within the hollow interior of the roll shell, the core 3 is arranged. A heating fluid medium flow path 3a is formed to penetrate the center of the core 3. The heating fluid medium flow path 3a is coupled with an flowing inlet of the rotary joint 4 via-the interior of the-rotary-driving shaft 2. The heating fluid medium flow path 1a formed between the inner wall of the roll shell 1 and the outer wall of the core 3 is coupled with the outlet of the rotary joint 4 via the interior of the rotary driving shaft 2.

The heating fluid medium is heated or cooled to a prescribed temperature through the cooling unit 5b of the heat exchanger device and heating unit 5a thereof. The heating fluid medium is supplied into the roll shell 1 by the circulating pump 6 to flow through the heating fluid medium flow paths 3a and 1a, and further circulates to the cooling unit 5b of the heat exchanger device. As regards the temperature of the circulating heating fluid medium, the detected temperature of the temperature sensor 9 for detecting the temperature of the roll shell 1 and that of the temperature sensor 10 for detecting the temperature of the heating fluid medium to be supplied into the roll shell 1 are compared with a target value by the heating fluid medium temperature adjusting circuit 11 as required. The control signal corresponding to the difference by comparison is supplied to the power control circuit 7 to control the quantity of generated heat of a heating element of the heating unit 5a of the heat exchanger so that the temperature of the heating fluid medium flowing through the heating unit 5a is adjusted. Further, the control signal corresponding to the difference is supplied to the cooling water adjusting electromagnetic valve 8 so that the heating fluid medium flowing through the cooling unit 5b is adjusted.
- [Patent Reference 1]: JP-A-2004-195888

In the heating fluid medium passing roller device configured as described above, with provision of the jacket chamber sealed with the gas-liquid two phase heating medium within the wall of the roller, the identical surface temperature can be obtained at the flow rate of 1/20 as compared with the roller having no jacket chamber, thereby contributing to energy saving. However, since the roller at issue is adapted to conduct heat to the surface of the roller by causing the heating fluid medium to flow through the roller, a difference occurs between the temperature of the heating fluid medium flowing through the roller and the temperature at the inner wall of the roller owing to their thermal conductivity. Thus, a difference due to the thermal conductivity of the roller material and a load heat quantity occurs between the temperature at the inner wall of the roller and the roller surface temperature. Namely, between the temperature of the heating fluid medium flowing through the roller and the roller surface temperature, a temperature difference occurs owing to various conditions of the quantity of the fluid, flow rate, roller material, roller wall thickness and load heat quantity. Particularly, in a roller for e.g. paper manufacturing which generates a large quantity of load heat and has a large roller thickness, the temperature difference of 50 °C to 100 °C frequently occurs. As a result, by only detecting the temperature of the heating fluid medium supplied into the conventional roller and the roller surface temperature and adjusting the temperature of the heating fluid medium on the basis of the detection, it is difficult to quickly respond to a temperature change in the roller generating a large quantity of load heat, and so a large quantity of energy is correspondingly consumed.

A further heating fluid medium passing roller is disclosed in US 6,209,451 B1.

### SUMMARY OF THE INVENTION

An object of this invention is to solve the above problem and provide a heating fluid medium passing roller in which a jacket chamber sealed with a gas-liquid two phase heating medium is provided within the wall of the roller and a heating fluid medium is passed through the roller, which can quickly respond to a change in a roller surface temperature regardless of the quantity of load heat and thermal conductivity of the roller, thereby enhancing energy saving.

According to the present invention, the above object is solved with heating fluid medium passing roller devices having the features of claims 1 to 3, respectively.

In this invention, as regards the heating fluid medium heated to a predetermined temperature by the heating fluid medium temperature adjuster, the flow rate of the heating fluid medium to be supplied into the roller is adjusted by the heating fluid medium flow rate adjuster. Therefore, heat corresponding to the quantity of load heat and the thermal conductivity of the roller can be quickly applied to the roller so that the surface temperature of the roller can be made uniform with optimum energy saving in a longitudinal direction of the roller, i.e. the flowing direction of the heating fluid medium. Particularly, in the roller such as a roller for paper manufacturing having a large roller wall thickness and generating a large quantity of load heat, a long time is taken until the roller surface temperature lowers from a high temperature (e.g. 230 °C) when paper feeding is started to a predetermined temperature (e.g. 150 °C) and is stabilized. However, in accordance with this invention, this time can be greatly shortened, thereby increasing the production yield of the product with a high processing quality.

### BRIEF DESCRIPTION OF THE DRAWINGS

Fig. 1 is a configuration view showing the configuration of the heating fluid medium passing roller device according to an embodiment of this invention (Embodiment 1).
Fig. 2 is a configuration view showing the configuration of the heating fluid medium passing roller device according to an embodiment of this invention (Embodiment 2).
Fig. 3 is a configuration view showing the configuration of the heating fluid medium passing roller device according to an embodiment of this invention (Embodiment 3).
Fig. 4 is a configuration view showing the configuration of a conventional heating fluid medium passing roller.

### DETAILED DESCRIPTION OF THE PREFERRED EMBODIMENTS

In a heating fluid medium passing roller in which a jacket chamber sealed with a gas-liquid two phase heating medium is provided within the wall of the roller and a heating fluid medium is passed through the roller, the object to quickly respond to a change in a roller surface temperature regardless of the quantity of load heat and thermal conductivity of the roller, thereby enhancing energy saving has been realized by adjusting the temperature and flow rate of the heating fluid medium to be supplied into the roller.

### (Embodiment 1)

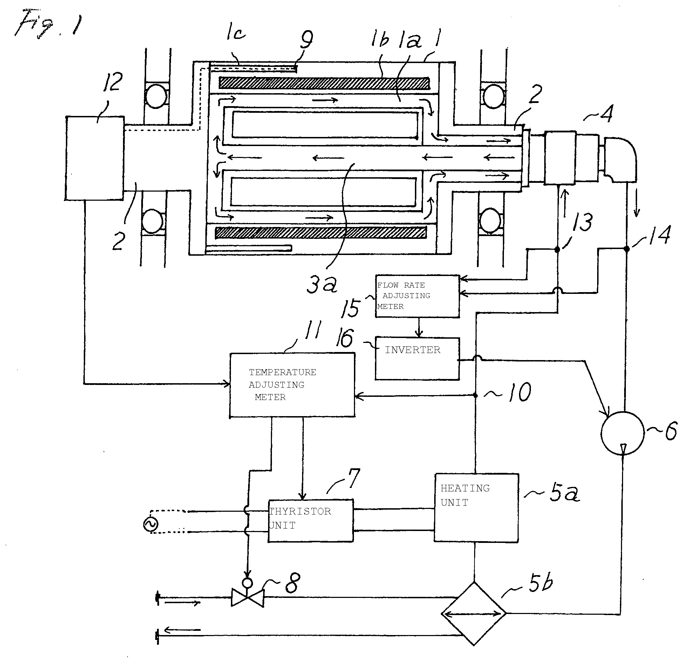

Fig. 1 is a configuration view showing the configuration of the heating fluid medium passing roller device according to an embodiment of this invention. In Fig. 1, like reference numerals referring to like parts in the conventional heating fluid medium passing roller shown in Fig. 4 will not be explained. In Fig. 1, reference numeral 13 denotes a temperature sensor for detecting the temperature of the heating fluid medium at the inlet of a rotary joint 4; 14a temperature sensor for detecting the temperature of the heating fluid medium at the outlet of-a rotary joint 4; 15a flow rate adjusting meter; and 16 an inverter for driving the circulating pump 6.

The heating fluid medium is heated or cooled to a prescribed temperature by passing through the cooling unit 5b of the heat exchanger device and heating unit 5a thereof. The heating fluid medium is supplied into the roll shell 1 by the circulating pump 6 to flow through the heating fluid medium flow paths 3a and 1a, and further circulates to the cooling unit 5b of the heat exchanger device. As regards the temperature of the circulating fluid medium, the detected temperature of the temperature sensor 9 for detecting the temperature of the roll shell 1 and that of the temperature sensor 10 for detecting the temperature of the heating fluid medium immediately after having passed through the heating unit are compared with a target value by the heating fluid medium temperature adjusting meter 11 as required. The control signal corresponding to the difference by comparison is supplied to the power control circuit 7 or the cooling water adjusting electromagnetic valve 8 to control the temperature of the heating fluid medium.

In accordance with this invention, there are provided a flow rate adjusting meter 15, a temperature sensor 13 for detecting the temperature of the heating fluid medium to be supplied into the roll shell 1 and a temperature sensor 14 for detecting the temperature of the heating fluid medium having flowed through the roll shell 1. The detected temperature of the temperature sensor 13 for detecting the heating fluid medium to be supplied into the roll shell 1 and the detected temperature of the temperature sensor 14 for detecting the heating fluid medium having flowed through the roll shell 1 are given to the rate adjusting meter 15, and the temperature difference therebetween is compared with a preset target value. Using a signal keeping the temperature difference constant, the inverter 16 is controlled to control the flow rate of the heating fluid medium to be supplied by the circulating pump 6.

For example, in order to set the unevenness of the surface temperature of the roll shell 1 at 1 °C or lower, the difference between the temperatures detected by the temperature sensors 13 and 14 must be reduced to 1 °C or lower. However, in the roller device which is provided with the jacket chamber sealed with the gas-liquid two phase heating medium in the wall of the roller, even at the temperature difference of 20 °C, the unevenness of the temperature of the roll shell 1 is 1 °C or lower. Thus, the flow rate is adjusted so that the difference between the temperatures detected by the temperature sensors 13 and 14 is 20 °C or lower. This adjustment can quickly respond to the difference between temperatures detected by the temperature sensors 13 and 14 which changes according to the quantity of load, and enables the optimum energy-saving operation under a given operation condition.

### (Embodiment 2)

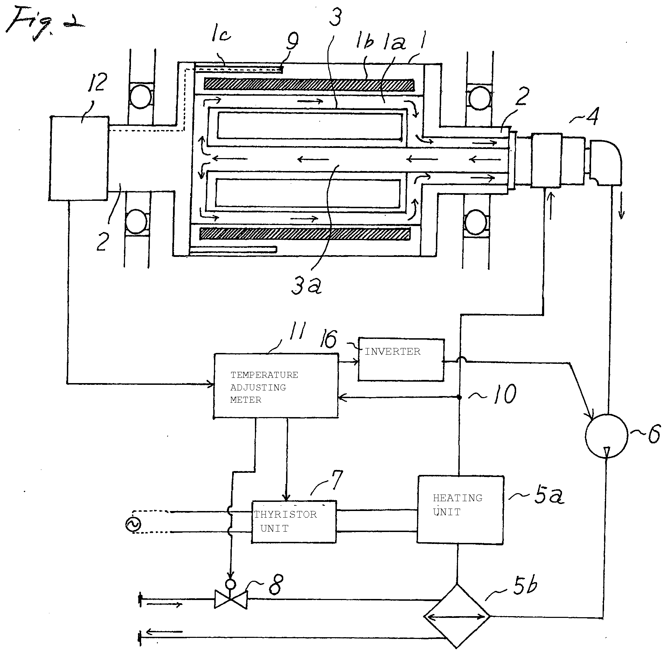

Fig. 2 is a configuration view showing the configuration of the heating fluid medium passing roller device according to an embodiment of this invention. In Fig. 2, like reference numerals referring to like parts in the conventional heating fluid medium passing roller shown in Fig. 1 will not be explained. This embodiment is different from the embodiment shown in Fig. 1 in that the control signal corresponding to the temperature difference acquired in the temperature adjusting meter 11 is employed, specifically, the temperature difference between the temperatures detected by the temperature sensor 9 for detecting the surface temperature of the roll shell 1 and detected by the temperature sensor 10 for detecting the heating fluid medium immediately after it has passed through the heating unit is compared with a preset target value and using a signal keeping the temperature difference constant, the inverter 16 is controlled to control the flow rate of the heating fluid medium to be supplied by the circulating pump 6.

For example, with the roller surface temperature being set at a predetermined temperature of 150 °C, in order to quickly raise the roller surface temperature, initially, the heating fluid medium is heated to 250 °C and the heating fluid medium heated is supplied into the roller at a maximum output of the circulating pump 6. In this way, the roller surface temperature can reach 150 °C in a short time. In this embodiment, at a predetermined time before the roller surface temperature reaches 150 °C, the temperature of the heating fluid medium is lowered by the temperature adjusting meter 11, and using the signal corresponding to the temperature difference acquired by the temperature adjusting meter 11, the inverter 16 is controlled to adjust the flow rate of the heating fluid medium to be supplied by the circulating pump 6. In such a configuration, the same advantage as that in the embodiment shown in Fig. 1 can be obtained.

### (Embodiment 3)

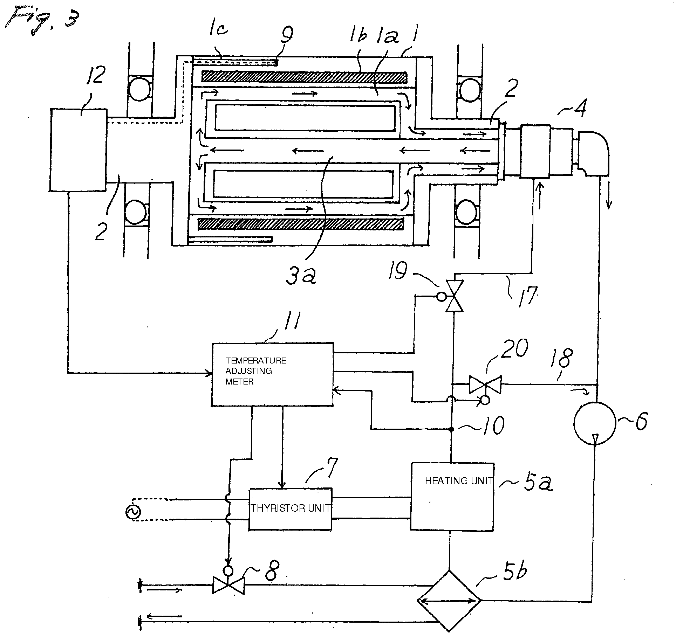

Fig. 3 is a configuration view showing the configuration of the heating fluid medium passing roller device according to an embodiment of this invention. In Fig. 3, like reference numerals referring to like parts in the heating fluid medium passing roller shown in Fig. 2 will not be explained. In the embodiment shown in Fig. 2, the flow rate of the heating fluid medium supplied into the roller is controlled by the pump 6. On the other hand, in this embodiment, the circulating path of the heating fluid path is constituted by a flow path 17 on which a flow rate adjusting electromagnetic valve 19 communicating with the heating fluid medium flow path of the roller is arranged and another flow path 18 on which another flow rate adjusting electromagnetic valve 20 for bypassing the roller i-s arranged.- - Using the control signal corresponding to the temperature difference acquired in the temperature adjusting meter 11, the flow rate adjusting electromagnetic valves 19 and 20 are controlled to control the flow rate of the heating fluid medium flowing through the roller. Incidentally, using the output signal from the flow rate adjusting meter 15 in the embodiment shown in Fig. 1, the flow rate adjusting electromagnetic valves 19 and 20 may be controlled. In such a configuration, the same advantage as that in the embodiment shown in Fig. 1 can be obtained.

In each of the embodiments described above, at the one end of the roller, the heating fluid medium is supplied in or exhausted from the roller. However, at the one end of the roller, the heating fluid medium may be supplied into the roller whereas at the other end of the roller, the heating fluid medium may be exhausted from the roller.

## Claims

1. A heating fluid medium passing roller device comprising:
a roller (1) having a plurality of jackets sealed with a gas-liquid two-phase heating medium in wall thereof and a heating fluid medium flow path (1a, 3a) for passing a circulating heating fluid medium through the roller (1),
a heating fluid medium temperature adjuster (11) for adjusting the temperature of the heating fluid medium, and
a heating fluid medium flow-rate adjuster (16; 19, 20) for adjusting the flow-rate of the heating fluid medium to be supplied into the heating fluid medium flow path (3a) of the roller, wherein the surface temperature of the roller (1) is kept at a prescribed temperature by the heating fluid medium flowing through the heating fluid medium flow path (3a), which is adjusted by the heating fluid medium temperature adjuster (11) and the heating fluid medium flow-rate adjuster (16; 19, 20),
**characterized in that**
the heating fluid medium flow-rate adjuster (16; 19, 20) has a pump (6) for circulating the heating fluid medium, and
the flow-rate of the heating fluid medium to be supplied into the roller (1) by the pump (6) is adjusted on the basis of a difference between the surface temperature of the roller (1) and the temperature of the heating fluid medium supplied to the heating fluid medium flow path (3a) of the roller (1).

2. A heating fluid medium passing roller device comprising:
a roller (1) having a plurality of jackets sealed with a gas-liquid two-phase heating medium in wall thereof and a heating fluid medium flow path (1a, 3a) for passing a circulating heating fluid medium through the roller (1),
a heating fluid medium temperature adjuster (11) for adjusting the temperature of the heating fluid medium, and
a heating fluid medium flow-rate adjuster (16; 19, 20) for adjusting the flow-rate of the heating fluid medium to be supplied into the heating fluid medium flow path (3a) of the roller, wherein
the surface temperature of the roller (1) is kept at a prescribed temperature by the heating fluid medium flowing through the heating fluid medium flow path (3a), which is adjusted by the heating fluid medium temperature adjuster (11) and the heating fluid medium flow-rate adjuster (16; 19, 20),
**characterized in that**
the heating fluid medium flow-rate adjuster has a pump (6) for circulating the heating fluid medium, and
the flow-rate of the heating fluid medium to be supplied into the roller (1) by the pump (6) is adjusted on the basis of a difference between the temperature of the heating fluid medium supplied to the heating fluid medium flow path (3a) of the roller (1) and the temperature of the heating fluid medium exhausted from the heating fluid medium flow path (1a).

3. A heating fluid medium passing roller device comprising:
a roller (1) having a plurality of jackets sealed with a gas-liquid two-phase heating medium in wall thereof and a heating fluid medium flow path (1a, 3a) for passing a circulating heating fluid medium through the roller (1),
a heating fluid medium temperature adjuster (11) for adjusting the temperature of the heating fluid medium, and
a heating fluid medium flow-rate adjuster (16; 19, 20) for adjusting the flow-rate of the heating fluid medium to be supplied into the heating fluid medium flow path (3a) of the roller, wherein
the surface temperature of the roller (1) is kept at a prescribed temperature by the heating fluid medium flowing through the heating fluid medium flow path (3a), which is adjusted by the heating fluid medium temperature adjuster (11) and the heating fluid medium flow-rate adjuster (16; 19, 20),
**characterized in that**
a circulating path of the heating fluid medium includes a flow path (17) on which a flow-rate adjusting valve (19) communicating with the heating fluid medium flow path (3a) of the roller (1) is arranged, and a flow path (18) on which a flow-rate adjusting valve (20) bypassing the roller (1) is arranged, and
the heating fluid medium flow-rate adjuster (16; 19, 20) adjusts the flow-rate of the heating fluid medium to be supplied into the roller (1) by each of the flow-rate adjusting valves (19, 20) on the basis of a difference between the surface temperature of the roller (1) and the temperature of the heating fluid medium to be supplied to the heating fluid medium flow path (3a) of the roller (1).

## Patentansprüche

1. Heizfluidmediumführende Walzenvorrichtung mit:
einer Walze (1), die eine Vielzahl von Mänteln hat, in deren Wand ein Gas-Flüssigkeits-Zwei-Phasen-Heizmedium abgedichtet ist, und die einen Heizfluidmediumströmungspfad (1a, 3a) zum Hindurchführen eines zirkulierenden Heizfluidmediums durch die Walze (1) hat,
einer Heizfluidmediumtemperatureinstelleinrichtung (11) zum Einstellen der Temperatur des Heizfluidmediums, und
einer Heizfluidmediumdurchflusseinstelleinrichtung (16; 19, 20) zum Einstellen des Durchflusses des Heizfluidmediums, welches in den Heizfluidmediumströmungspfad (3a) der Walze zuzuführen ist, wobei
die Oberflächentemperatur der Walze (1) durch das Heizfluidmedium, welches durch den Heizfluidmediumströmungspfad (3a) hindurchströmt, bei einer vorbestimmten Temperatur gehalten wird, welche durch die Heizfluidmediumtemperatureinstelleinrichtung (11) und die Heizfluidmediumdurchflusseinstelleinrichtung (16; 19, 20) eingestellt wird,
**dadurch gekennzeichnet, dass**
die Heizfluidmediumdurchflusseinstelleinrichtung (16; 19, 20) eine Pumpe (6) zum Zirkulieren des Heizfluidmediums hat, und
der Durchfluss des durch die Pumpe (6) in die Walze (1) zuzuführenden Heizfluidmediums auf der Grundlage einer Differenz zwischen der Oberflächentemperatur der Walze (1) und der Temperatur des zu dem Heizfluidmediumströmungspfad (3a) der Walze (1) zugeführten Heizfluidmediums eingestellt wird.

2. Heizfluidmediumführende Walzenvorrichtung mit:
einer Walze (1), die eine Vielzahl von Mänteln hat, in deren Wand ein Gas-Flüssigkeits-Zwei-Phasen-Heizmedium abgedichtet ist, und die einen Heizfluidmediumströmungspfad (1a, 3a) zum Hindurchführen eines zirkulierenden Heizfluidmediums durch die Walze (1) hat,
einer Heizfluidmediumtemperatureinstelleinrichtung (11) zum Einstellen der Temperatur des Heizfluidmediums, und
einer Heizfluidmediumdurchflusseinstelleinrichtung (16; 19, 20) zum Einstellen des Durchflusses des Heizfluidmediums, welches in den Heizfluidmediumströmungspfad (3a) der Walze zuzuführen ist, wobei
die Oberflächentemperatur der Walze (1) durch das Heizfluidmedium, welches durch den Heizfluidmediumströmungspfad (3a) hindurchströmt, bei einer vorbestimmten Temperatur gehalten wird, welche durch die Heizfluidmediumtemperatureinstelleinrichtung (11) und die Heizfluidmediumdurchflusseinstelleinrichtung (16; 19, 20) eingestellt wird,
**dadurch gekennzeichnet, dass**
die Heizfluidmediumdurchflusseinstelleinrichtung eine Pumpe (6) zum Zirkulieren des Heizfluidmediums hat, und
der Durchfluss des durch die Pumpe (6) in die Walze (1) zuzuführenden Heizfluidmediums auf der Grundlage einer Differenz zwischen der Temperatur des zu dem Heizfluidmediumströmungspfad (3a) zu der Walze (1) zugeführten Heizfluidmediums und der Temperatur des von dem Heizfluidmediumströmungspfad (1a) abgegebenen Heizfluidmediums eingestellt wird.

3. Heizfluidmediumführende Walzenvorrichtung mit:
einer Walze (1), die eine Vielzahl von Mänteln hat, in deren Wand ein Gas-Flüssigkeits-Zwei-Phasen-Heizmedium abgedichtet ist, und die einen Heizfluidmediumströmungspfad (1a, 3a) zum Hindurchführen eines zirkulierenden Heizfluidmediums durch die Walze (1) hat,
einer Heizfluidmediumtemperatureinstelleinrichtung (11) zum Einstellen der Temperatur des Heizfluidmediums, und
einer Heizfluidmediumdurchflusseinstelleinrichtung (16; 19, 20) zum Einstellen des Durchflusses des Heizfluidmediums, welches in den Heizfluidmediumströmungspfad (3a) der Walze zuzuführen ist, wobei
die Oberflächentemperatur der Walze (1) durch das Heizfluidmedium, welches durch den Heizfluidmediumströmungspfad (3a) hindurchströmt, bei einer vorbestimmten Temperatur gehalten wird, welche durch die Heizfluidmediumtemperatureinstelleinrichtung (11) und die Heizfluidmediumdurchflusseinstelleinrichtung (16; 19, 20) eingestellt wird,
**dadurch gekennzeichnet, dass**
ein Zirkulationspfad des Heizfluidmediums einen Strömungspfad (17), an welchem ein Durchflusseinstellventil (19) angeordnet ist, das mit dem Heizfluidmediumströmungspfad (3a) der Walze (1) in Verbindung ist, und einen Strömungspfad (18) aufweist, an welchem ein die Walze (1) umgehendes Durchflusseinstellventil (20) angeordnet ist, und
die Heizfluidmediumdurchflusseinstelleinrichtung (16; 19, 20) den Durchfluss des in die Walze (1) zuzuführenden Heizfluidmediums durch jedes der Durchflusseinstellventile (19, 20) auf der Grundlage einer Differenz zwischen der Oberflächentemperatur der Walze (1) und der Temperatur des zu dem Heizfluidmediumströmungspfad (3a) der Walze (1) zuzuführenden Heizfluidmediums einstellt.

## Revendications

1. Rouleau chauffé par un fluide, comprenant :
un rouleau (1) ayant une pluralité d'enveloppes scellées par un support de chauffage à deux phases gaz-liquide dans une paroi de celui-ci et un chemin d'écoulement de fluide chauffant (1a, 3a) pour faire circuler un fluide chauffant à travers le rouleau (1),
un dispositif de réglage de la température du fluide chauffant (11) pour régler la température de fluide chauffant, et
un dispositif de réglage de débit de fluide chauffant (16 ; 19, 20) pour régler le débit du fluide chauffant devant être fourni à l'intérieur du chemin d'écoulement de fluide chauffant (3a) du rouleau, dans lequel
la température de surface du rouleau (1) est maintenue à une température prescrite par le fluide chauffant s'écoulant à travers le chemin d'écoulement de fluide chauffant (3a), laquelle est réglée par le dispositif de réglage de température de fluide chauffant (11) et le dispositif de réglage de débit de fluide chauffant (16 ; 19, 20),
**caractérisé en ce que**
le dispositif de réglage de débit de fluide chauffant (16 ; 19, 20) est équipé d'une pompe (6) pour faire circuler le fluide chauffant, et
le débit du fluide chauffant devant être fourni à l'intérieur du rouleau (1) par la pompe (6) est réglé sur la base d'une différence entre la température de surface du rouleau (1) et la température du fluide chauffant fourni au chemin d'écoulement du fluide chauffant (3a) du rouleau (1).

2. Rouleau chauffé par un fluide comprenant :
un rouleau (1) ayant une pluralité d'enveloppes scellées par un support de chauffage à deux phases gaz-liquide dans une paroi de celui-ci et un chemin d'écoulement de fluide chauffant (1a, 3a) pour faire circuler un fluide chauffant à travers le rouleau (1),
un dispositif de réglage de la température de fluide chauffant (11) pour régler la température du fluide chauffant, et
un dispositif de réglage de débit de fluide chauffant (16 ; 19, 20) pour régler le débit du fluide chauffant devant être fourni à l'intérieur du chemin d'écoulement de fluide chauffant (3a) du rouleau, dans lequel
la température de surface du rouleau (1) est maintenue à une température prescrite par le fluide chauffant s'écoulant à travers le chemin d'écoulement de fluide chauffant (3a), laquelle est réglée par le dispositif de réglage de température de fluide chauffant (11) et le dispositif de réglage de débit de fluide chauffant (16 ; 19, 20),
**caractérisé en ce que**
le dispositif de réglage de débit de fluide chauffant est équipé d'une pompe (6) pour faire circuler le fluide chauffant, et
le débit du fluide chauffant devant être fourni à l'intérieur du rouleau (1) par la pompe (6) est réglé sur la base d'une différence entre la température du fluide chauffant fourni au chemin d'écoulement du fluide chauffant (3a) du rouleau (1) et la température du fluide chauffant évacué à partir du chemin d'écoulement du fluide chauffant (1a).

3. Rouleau chauffé par un fluide, comprenant :
un rouleau (1) ayant une pluralité d'enveloppes scellées par un support de chauffage à deux phases gaz-liquide dans une paroi de celui-ci et un chemin d'écoulement de fluide chauffant (1a, 3a) pour faire circuler un fluide chauffant à travers le rouleau (1),
un dispositif de réglage de la température de fluide chauffant (11) pour régler la température du fluide chauffant, et
un dispositif de réglage de débit de fluide chauffant (16 ; 19, 20) pour régler le débit du fluide chauffant devant être fourni à l'intérieur du chemin d'écoulement de fluide chauffant (3a) du rouleau, dans lequel
la température de surface du rouleau (1) est maintenue à une température prescrite par le fluide chauffant s'écoulant à travers le chemin d'écoulement de fluide chauffant (3a), laquelle est réglée par le dispositif de réglage de température de fluide chauffant (11) et le dispositif de réglage de débit de fluide chauffant (16 ; 19, 20),
**caractérisé en ce que**
un chemin de circulation du fluide chauffant comprend un chemin d'écoulement (17) sur lequel est agencée une soupape de réglage de débit (19) en communication avec le chemin d'écoulement de fluide chauffant (3a) du rouleau (1), et un chemin d'écoulement (18) sur lequel est agencée une soupape de réglage de débit (20) contournant le rouleau (1), et
le dispositif de réglage de débit de fluide chauffant (16 ; 19, 20) règle le débit du fluide chauffant devant être fourni à l'intérieur du rouleau (1) par chacune des soupapes de réglage de débit (19, 20) sur la base d'une différence entre la température de surface du rouleau (1) et la température du fluide chauffant devant être fourni au chemin d'écoulement du fluide chauffant (3a) du rouleau (1).
